# EUROPEAN PATENT APPLICATION

(11) **EP 4 836 383 A1**
(43) Date of publication of application: **04.11.2026**
(21) Application number: 25829432.1
(22) Date of filing: 17.04.2025
(51) Int. Cl.: H04L 67/12

(54) **DATA PROCESSING SYSTEM AND METHOD, AND ELECTRONIC DEVICE, STORAGE MEDIUM AND PROGRAM PRODUCT**

(30) Priority: 17.06.2024 CN 202410781428
(71) Applicant: Tencent Technology (Shenzhen) Company Limited, Shenzhen, Guangdong 518057 (CN)
(72) Inventor: YANG, Dongcheng, Shenzhen, Guangdong 518057 (CN); CHEN, Yudong, Shenzhen, Guangdong 518057 (CN)
(74) Representative: EP&C
(86) International application number: PCT/CN2025/089484
(87) International publication number: WO 2025/260948

(57) **Abstract**

Provided in the present application are a data processing system and method, and an electronic device, a storage medium and a program product. In the present application, the data processing system comprises a terminal device and a computing cluster. The computing cluster comprises at least two layers-for-core (LC s), at least two layer-for-access (LA) groups associated with each LC, and a plurality of cloud computing devices associated with each LA group, wherein each LA group comprises at least two LAs, a plurality of cloud computing devices associated with a same LA group communicate with each other on the basis of the LAs in the LA group, and pluralities of cloud computing devices associated with different LA groups communicate with each other on the basis of the LAs of the corresponding LA groups and the associated LCs. The terminal device is used for sending a first acquisition request to at least two cloud computing devices in the computing cluster; receiving LA group identifier information returned by the cloud computing devices; and sorting the at least two cloud computing devices according to the LA group identifier information, and according to the order of the at least two cloud computing devices after sorting, using the at least two cloud computing devices for computing.

## Description

### RELATED APPLICATIONS

This application claims priority to Chinese Patent Application No. 202410781428.8, filed with the China National Intellectual Property Administration on June 17, 2024, and entitled "DATA PROCESSING METHOD AND APPARATUS, ELECTRONIC DEVICE, STORAGE MEDIUM, AND PROGRAM PRODUCT", which is incorporated herein by reference in its entirety.

### FIELD OF THE TECHNOLOGY

This application relates to the technical field of cloud computing, big data, and the like, and specifically, to a data processing system and method, an electronic device, a storage medium, and a program product.

### BACKGROUND OF THE DISCLOSURE

A hyper computing cluster uses high-performance cloud computing devices as nodes, interconnected by using the remote direct memory access (RDMA) technology, to provide a network service with a high bandwidth and an extremely low delay. A user may use the hyper computing cluster for parallel computing such as large-scale high-performance computing, artificial intelligence, and big data recommendation.

In the related technology, a cloud manager may manually select a specific quantity of cloud computing devices and related resources based on a user requirement, and orchestrate the resources to provide service computing for the user. Orchestration of cloud resources refers to combination, allocation, and management on various computing resources in a cloud environment, to achieve efficient utilization of the resources and smooth running of services. Orchestration of the cloud resources may include resource allocation, resource scheduling, network topology orchestration, resource management, and the like.

### SUMMARY

This application provides a data processing system, method, and apparatus, an electronic device, a storage medium, and a program product, to reduce a network delay of communication between cloud computing devices after orchestration. The technical solutions are as follows.

This application provides a data processing system, the system including a terminal device and a computing cluster; the computing cluster including at least two aggregation devices (layer for core devices, LC devices), at least two access device (layer for access device, LA device) groups each associated with at least one of the LC devices, and cloud computing devices associated with the LA device groups; cloud computing devices associated with a same LA device group communicating with each other via at least one LA device within the LA device group, and cloud computing devices associated with different LA device groups communicating with each other via LA devices of the different LA device groups and an LC device; and
the terminal device being configured for: transmitting, to a first cloud computing device of the at least two cloud computing devices in the computing cluster, a first obtaining request for obtaining LA device group identification information corresponding to the first cloud computing device;
receiving LA device group identification information returned by the first cloud computing device;
sorting the at least two cloud computing devices by the LA device group identification information, and performing computation using at least two cloud computing devices from a same LA device group that are identified through the sorting.

This application further provides a data processing method, performed by a terminal device, and including:
transmitting, to a first cloud computing device of at least two cloud computing devices in a computing cluster, a first obtaining request for obtaining LA device group identification information corresponding to the first cloud computing device; the computing cluster comprising at least two LC devices, at least two LA device groups each associated with at least one of the LC devices, and cloud computing devices associated with the LA device groups; cloud computing devices associated with a same LA device group communicating with each other via at least one LA device of the LA device group, and cloud computing devices associated with different LA device groups communicating with each other via LA devices of the different LA device groups and an LC device;
receiving LA device group identification information returned by the first cloud computing devices; and
sorting the at least two cloud computing devices by the LA device group identification information, and performing computation using at least two cloud computing devices from a same LA device group that are identified through the sorting.

This application further provides a data processing method, performed by a cloud management device of a computing cluster, the computing cluster including at least two LC device s, at least two LA device groups each associated with at least one of the LC devices, and cloud computing devices associated with the LA device groups; cloud computing devices associated with a same LA device group communicating with each other via at least one LA device within the LA device group, and cloud computing devices associated with different LA device groups communicating with each other via LA devices of the different LA device groups and an LC; and
the method including:
determining an identifier of an LA device group associated with a cloud computing device; and
determining, based on the identifier of the LA device group, LA device group identification information associated with the cloud computing device, and providing the cloud computing device with the LA device group identification information which is representation information of the identifier of the LA device group associated with the cloud computing device and is used by a terminal device for sorting at least two cloud computing devices to determine at least two cloud computing devices from a same LA device group for performing computation for the terminal device.

This application further provides an electronic device, including a memory, a processor, and a computer program stored on the memory, the processor executing the computer program to implement the foregoing data processing method.

This application further provides a non-transitory computer-readable storage medium, having a computer program stored therein, the computer program, when executed by a processor, implementing the foregoing data processing method.

This application further provides a computer program product, including a computer program, the computer program, when executed by a processor, implementing the foregoing data processing method.

In the technical solutions provided in this application, the terminal device sorts the cloud computing devices based on the LA device group identification information of the cloud computing devices, to use, in the order obtained through sorting, the cloud computing devices for computing, to arrange computing tasks on cloud computing devices in the same LA device group as far as possible, thereby greatly reducing cross-LA device group communication between the cloud computing devices, minimizing transmission resource consumption, reducing network delays, and improving computing efficiency. In addition, the representation information of the identifier of the LA device group, instead of an original identifier of the LA device group, is provided to the terminal device, which helps ensure information security of the computing cluster.

### BRIEF DESCRIPTION OF THE DRAWINGS

To describe technical solutions in embodiments of this application more clearly, the following briefly describes accompanying drawings required for describing the embodiments of this application.
FIG. 1 is a schematic diagram of an implementation environment of a data processing method according to an embodiment of this application.
FIG. 2 is a schematic diagram of signaling interaction of a data processing method according to an embodiment of this application.
FIG. 3 is a schematic diagram of a system architecture of a computing cluster according to an embodiment of this application.
FIG. 4 is a schematic diagram of a data processing procedure according to an embodiment of this application.
FIG. 5 is a schematic diagram of an allocation process according to an embodiment of this application.
FIG. 6 is a schematic diagram of an allocation procedure according to an embodiment of this application.
FIG. 7 is a schematic diagram of a data processing procedure according to an embodiment of this application.
FIG. 8 is a schematic diagram of a system architecture of a computing cluster according to an embodiment of this application.
FIG. 9 is a schematic diagram of a system architecture of a computing cluster according to an embodiment of this application.
FIG. 10 is a schematic structural diagram of a data processing system according to an embodiment of this application.
FIG. 11 is a schematic structural diagram of a data processing apparatus according to an embodiment of this application.
FIG. 12 is a schematic structural diagram of a data processing apparatus according to an embodiment of this application.
FIG. 13 is a schematic structural diagram of a data processing apparatus according to an embodiment of this application.
FIG. 14 is a schematic structural diagram of an electronic device according to an embodiment of this application.

### DESCRIPTION OF EMBODIMENTS

The following describes embodiments of this application with reference to the accompanying drawings in this application. The following implementations described with reference to the accompanying drawings are exemplary descriptions for explaining the technical solutions of the embodiments of this application, and do not limit the technical solutions of the embodiments of this application.

A person skilled in the art may understand that, unless otherwise specifically stated, the singular forms "a", "an", "the", and "this" used herein may also include plural forms. The terms "include" and "comprise" used in some embodiments of this application mean that corresponding features may be implemented as presented features, information, data, steps, or operations, but do not exclude implementation as other features, information, data, steps, or operations supported in the technical field. The term, involved in the following description, "some embodiments" describes subsets of all possible embodiments, but "some embodiments" may be the same subset or different subsets of all the possible embodiments and may be combined with each other without conflict.

In specific implementations of this application, user-related data such as LA device group identification information, a device identifier of a cloud computing device, and a user computing cluster or a cloud computing device associated with a user client is used. When the above embodiments of this application are applied to a specific product or technology, permission or consent of a user needs to be obtained, and collection, use, and processing of the related data need to comply with relevant laws, regulations, and standards of related countries and regions. In other words, in some embodiments of this application, the foregoing user-related data needs to be obtained only when the data is authorized and agreed by an object, and meets relevant laws, regulations, and standards of countries and regions.

Terms and related technologies involved in this application are described and explained below.

A computing cluster includes a plurality of aggregation devices (also referred to as layers for core (LC) devices), a plurality of access device (also referred to as layer for access (LA) device) groups associated with each of the LC devices, and a plurality of cloud computing devices associated with each of the LA device groups. Each of the LA device groups includes a plurality of LA devices, cloud computing devices associated with the same LA device group communicate with each other based on an LA of the LA device group, and cloud computing devices associated with different LA device groups communicate with each other based on LA devices of the corresponding LA device groups and an associated LC. The LA device group identification information may be referred to as topology information reflecting a communication topology relationship among cloud computing devices.

For example, the computing cluster may be a hyper computing cluster (HCC), and remote direct memory access (RDMA) communication may be performed between the cloud computing devices in the computing cluster, to provide a network service with a high bandwidth and an extremely low delay for a user, to meet a requirement of large-scale and high-performance parallel computing of a related service.

An LA device group includes a plurality of LA devices, and in a computing cluster, LA devices of the same LA device group may be connected to at least two cloud computing devices, so that RDMA communication may be performed between the cloud computing devices of the same LA device group based on only the LA devices.

An LC is configured to aggregate traffic of a plurality of LA device groups, to implement RDMA communication between cloud computing devices across the LA device groups; and connect access devices of the LA device groups, to implement communication between the devices. For example, the LC may be a switch.

A cloud computing device is a cloud server configured to perform parallel computing in a computing cluster. For example, the cloud computing device may be a GPU server of a hyper computing cluster.

Some embodiments provide a data processing system. The system may include a terminal device and a computing cluster. The computing cluster includes at least two aggregation devices (LC devices), at least two access device (LA) groups each associated with one of the LC devices, and each of the LA device groups is associated with a plurality of cloud computing devices. Each of the LA device groups includes at least two LA devices. In an example, each LA group is associated with at least one LC device, and each LC device may be associated with one or multiple LA groups. In an example, each cloud computing device is associated with one or multiple LA devices in one LA group, and each LA device may be associated with one or multiple cloud computing devices. Cloud computing devices associated with the same LA device group communicate with each other via at least one LA device within the LA device group, and cloud computing devices associated with different LA device groups communicate with each other via LA devices of the different LA device groups and at least one LC.

In the system, the terminal device may be configured to: transmit a first obtaining request to at least two cloud computing devices (for example, cloud computing devices in a user computing cluster corresponding to a user of the terminal device) in the computing cluster, the first obtaining request being configured for requesting to obtain access device (LA) group identification information corresponding to the cloud computing devices; receive LA device group identification information returned by the at least two cloud computing devices, LA device group identification information of a cloud computing device being representation information of an identifier of an LA device group associated with the cloud computing device; and sort the at least two cloud computing devices based on the LA device group identification information, and use, in an order obtained through sorting, the at least two cloud computing devices for computing.

Accordingly, the terminal device sorts the cloud computing devices based on the LA device group identification information of the cloud computing devices, and uses the cloud computing devices in order for computing, to arrange computing tasks on cloud computing devices in the same LA device group as far as possible, thereby reducing cross-LA device group communication between the cloud computing devices, minimizing transmission resource consumption, reducing a network delay, and improving computing efficiency. In addition, the representation information of the identifier of the LA device group, instead of an original identifier of the LA device group, is provided to the terminal device, which helps ensure information security of the computing cluster.

In some embodiments, the data processing system may further include: a cloud management device. The cloud management device is configured to: perform transformation on the identifier of the LA device group associated with the cloud computing device to obtain the LA device group identification information of the cloud computing device, and provide the LA device group identification information to the cloud computing device.

In some embodiments, the terminal device may further transmit an allocation request to the cloud management device. The allocation request is configured for requesting to allocate a cloud computing device to the terminal device. The terminal device may receive device identifiers of the at least two cloud computing devices returned by the cloud management device, and determine the at least two cloud computing devices based on the device identifiers. The cloud management device may determine a quantity of idle cloud computing devices that are associated with each of the LA device groups and that are in an idle state; and determine an order of at least two LA device groups based on the determined quantity of idle devices, sequentially select, in the determined order of the at least two LA device groups, the at least two cloud computing devices from cloud computing devices associated with at least one LA device group of the at least two LA device groups, and provide the device identifiers of the at least two cloud computing devices to the terminal device.

Accordingly, the cloud computing devices are selected from the LA device groups based on an order of the quantity of idle devices, which helps optimize use of cloud resources.

In some embodiments, when the allocation request is configured for requesting to create a user computing cluster, the cloud management device may arrange the at least two LA device groups in descending order based on the idle device quantity of the at least two LA device groups, to obtain a first LA device group sequence; and sequentially select, in an arrangement order of the at least two LA device groups in the first LA device group sequence, the at least two cloud computing devices from cloud computing devices associated with at least one LA device group of the at least two LA device groups, to construct the user computing cluster.

Accordingly, when the user computing cluster is created, the cloud computing devices are selected preferentially from an LA device group having a large idle device quantity, to evenly allocate user computing clusters to different LA device groups as far as possible, thereby improving processing efficiency of the user computing clusters.

In some embodiments, when the first LA device group sequence includes at least two LA device groups having the same idle device quantity, the cloud management device may arrange the LA device groups in the first LA device group sequence in ascending order based on a total quantity of user computing clusters to which the cloud computing devices in each of the LA device groups belong, to obtain a second LA device group sequence; and sequentially select, in an arrangement order of the LA device groups in the second LA device group sequence, the at least two cloud computing devices from the cloud computing devices associated with at least one LA device group of the at least two LA device groups.

Accordingly, when the user computing cluster is created, for the LA device groups having the same idle device quantity, the cloud computing devices are selected preferentially from an LA device group serving fewest user computing clusters, to evenly allocate the user computing clusters to different LA device groups as far as possible, thereby improving processing efficiency of the user computing clusters.

In some embodiments, the cloud management device may search the at least two LA device groups for an idle LA device group in which all the cloud computing devices are in an idle state; and select, when at least one idle LA device group exists, a cloud computing device from cloud computing devices associated with the at least one idle LA device group, to construct the user computing cluster.

Accordingly, when the user computing cluster is created, the cloud computing devices are selected preferentially from an idle LA device group, to evenly allocate the user computing clusters to different LA device groups as far as possible, thereby improving processing efficiency of the user computing clusters.

In some embodiments, when the allocation request is configured for requesting to add a cloud computing device to a user computing cluster, the cloud management device may arrange at least one LA device group to which the cloud computing devices in the user computing cluster belong in ascending order based on the idle device quantity, to obtain a third LA device group sequence; and sequentially select, in an arrangement order of the at least one LA device group in the third LA device group sequence, a cloud computing device from the at least one LA device group, to add the cloud computing device to the user computing cluster.

Accordingly, when the user computing cluster is expanded, the cloud computing devices are selected preferentially from the LA device group to which the user computing cluster belongs, to concentrate the same user computing cluster into the same LA device group as far as possible, thereby improving processing efficiency of the user computing cluster.

In some embodiments, when the selected cloud computing device cannot meet a requirement of the allocation request, the cloud management device may arrange the at least two LA device groups in descending order based on the idle device quantity, to obtain the first LA device group sequence; and sequentially select, in the arrangement order of the LA device groups in the first LA device group sequence, at least one cloud computing device from the cloud computing devices associated with at least one LA device group of the at least two LA device groups.

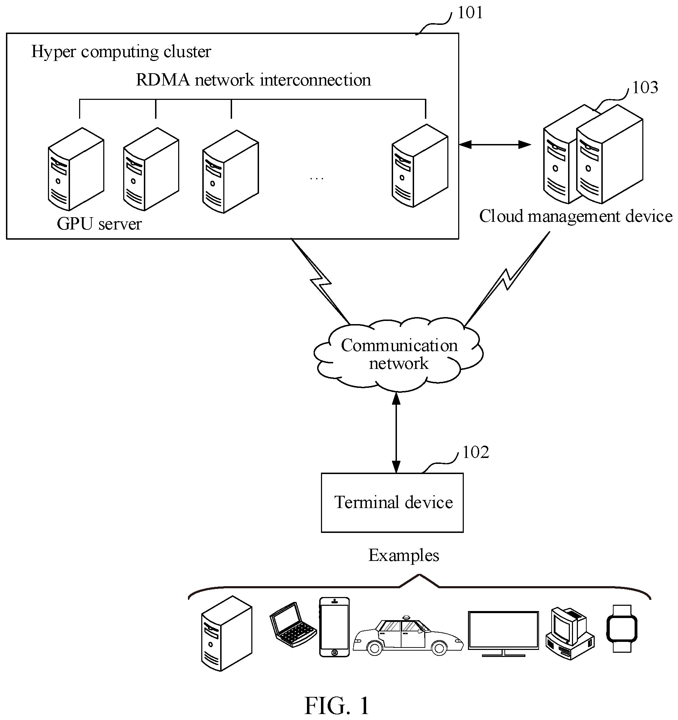

FIG. 1 is a schematic diagram of an implementation environment of a data processing method according to this application. As shown in FIG. 1, the implementation environment includes: a cloud computing device 101, a terminal device 102, and a cloud management device 103.

The cloud computing device 101 may be a computing device in a computing cluster, and a user may use the cloud computing device 101 for computing.

For example, the computing cluster may be a hyper computing cluster (HCC), and RDMA communication may be performed between the cloud computing devices, to provide a network service with a high bandwidth and an extremely low delay for a user, to meet a requirement of large-scale and high-performance parallel computing of a related service.

In one example, in the field of artificial intelligence, the cloud computing device may be a GPU server in the HCC, and the HCC may be used for large-scale AI training, to meet a computing requirement of the service for high computing performance, high stability, and high real-time performance of the GPU server.

In another example, in the field of industrial simulation, for example, in the automobile industry, the HCC may be used for simulation computing to drive design, to quickly deal with a real-time changing simulation requirement of enterprises in sectors like industrial manufacturing, and promote product development in time.

For example, the terminal device 102, also referred to as a client, is a device running an application client of the computing cluster. The cloud management device 103 is a background management end of the computing cluster. The user may respectively perform data exchange with the cloud computing device 101 and the cloud management device 103 through the client 102.

For example, the user may trigger, on the terminal device 102, an allocation request for allocating cloud computing devices. For example, the allocation request may be a creation request for creating a user computing cluster, or the allocation request may be a capacity expansion request for expanding an existing user computing cluster. The terminal device 102 may transmit the allocation request to the cloud management device 103. The cloud management device 103 may allocate the cloud computing device to the terminal device 102 from the computing cluster based on the allocation request, so that the terminal device 102 may perform computing processing for the related service by using the allocated cloud computing device.

In this embodiment of the present application, the cloud computing devices in the same LA device group may communicate with each other based on only an LA in the LA device group. The cloud computing devices in different LA device groups need to perform cross-LA device group communication. Specifically, cross-LA device group communication needs to be implemented based on LA devices in at least two different LA device groups and an LC associated with the at least two LA device groups. Therefore, compared with the communication between the cloud computing devices in the same LA device group, the cross-LA device group communication between the cloud computing devices apparently increases a network delay and consumes more network transmission resources. In other words, the communication in the same LA device group is more efficient and faster, and requires fewer network transmission resources than the cross-LA device group communication.

In this embodiment of the present application, the cloud computing device 101 may transmit a second obtaining request to the cloud management device 103. The second obtaining request is configured for obtaining LA device group identification information of the cloud computing device 101. The cloud management device 103 may determine, based on the second obtaining request from a pre-stored association relationship between device identifiers of the cloud computing devices 101 and identifiers of LA device groups, an identifier of an LA device group associated with the cloud computing device 101, generate the LA device group identification information based on the determined identifier of the LA device group, and return the LA device group identification information to the cloud computing device 101.

After the cloud management device 103 allocates the cloud computing device 101 to the terminal device 102, the terminal device 102 is associated with the allocated cloud computing device 101, the terminal device 102 may transmit a first obtaining request to each of the associated cloud computing devices 101, and each of the cloud computing devices 101 returns LA device group identification information to the terminal device 102 based on the first obtaining request. The terminal device 102 may sort the associated cloud computing devices based on the LA device group identification information, to use, in an order obtained through sorting, the associated cloud computing devices for computing.

In this embodiment of the present application, among the cloud computing devices sorted based on the LA device group identification information, device identifiers of the cloud computing devices belonging to the same LA device group are adjacent, to concentrate the cloud computing devices in the same LA device group. Based on this, when the client uses the cloud computing devices in order for computing, the cross-LA device group RDMA communication between the cloud computing devices can be greatly reduced, to minimize traffic detouring, and reduce the network delay and traffic consumption.

The cloud computing device 101 or the cloud management device 103 may be a server on a cloud, and the server may be an independent physical server, or a server cluster or distributed system including a plurality of physical servers, or a cloud server or server cluster that provides basic cloud computing services such as a cloud service, a cloud database, cloud computing, a cloud function, cloud storage, a network service, cloud communication, big data, and an artificial intelligence platform.

The terminal device 102 is a management platform on a user side, and the user may use the terminal device 102 on a terminal. For example, the user logs in to an account of the user on the terminal device 102 and uses a service of the computing cluster. The terminal device 102 may be a management platform in a form of a web page, for example, a management platform logged in to through a web page of a browser, or may be an independent application program, or may be a program plug-in located in an independent application program. This application does not limit a specific expression form of the terminal device 102. The terminal may be a smartphone, a tablet computer, a notebook computer, a digital broadcast receiver, a desktop computer, an on-board terminal (for example, an on-board navigation terminal or an on-board computer), a smart speaker, a smartwatch, or the like.

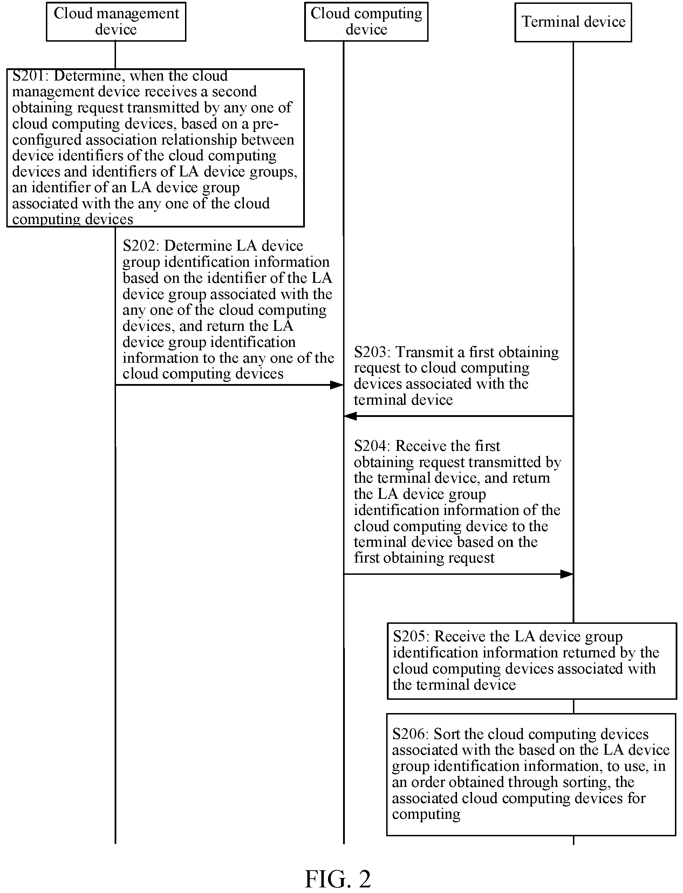

FIG. 2 is a schematic diagram of a data processing method according to an embodiment of this application. The data processing method may be interactively performed by a terminal device of a computing cluster, a cloud management device, and a cloud computing device. As shown in FIG. 2, the data processing method includes the following operations.

Operation 201: When the cloud management device receives a second obtaining request transmitted by any one of cloud computing devices, the cloud management device determines, based on a pre-configured association relationship between device identifiers of the cloud computing devices and identifiers of LA device groups, an identifier of an LA device group associated with any one of the cloud computing devices.

The second obtaining request is configured for requesting to obtain LA device group identification information of any one of the cloud computing devices. The LA device group identification information is configured for identifying the LA device group associated with any one of the cloud computing devices.

In this embodiment of the present application, the computing cluster includes a plurality of LC devices, a plurality of LA device groups associated with each of the LC devices, and a plurality of cloud computing devices associated with each of the LA device groups. Each of the LA device groups includes a plurality of LA devices, cloud computing devices associated with the same LA device group communicate with each other based on an LA of the LA device group, and cloud computing devices associated with different LA device groups communicate with each other based on LA devices of the corresponding LA device groups and an associated LC.

That each of the LC devices is associated with a plurality of LA device groups means that each of the LC devices is in communicative connection with the LA devices of the plurality of LA device groups, and communication between the plurality of LA device groups connected to the LC passes through the LC. That each of the LA device groups is associated with a plurality of cloud computing devices means that the LA devices included in each of the LA device groups are in communicative connection with the plurality of cloud computing devices, and communication between the cloud computing devices connected to the LA devices passes through the LA devices.

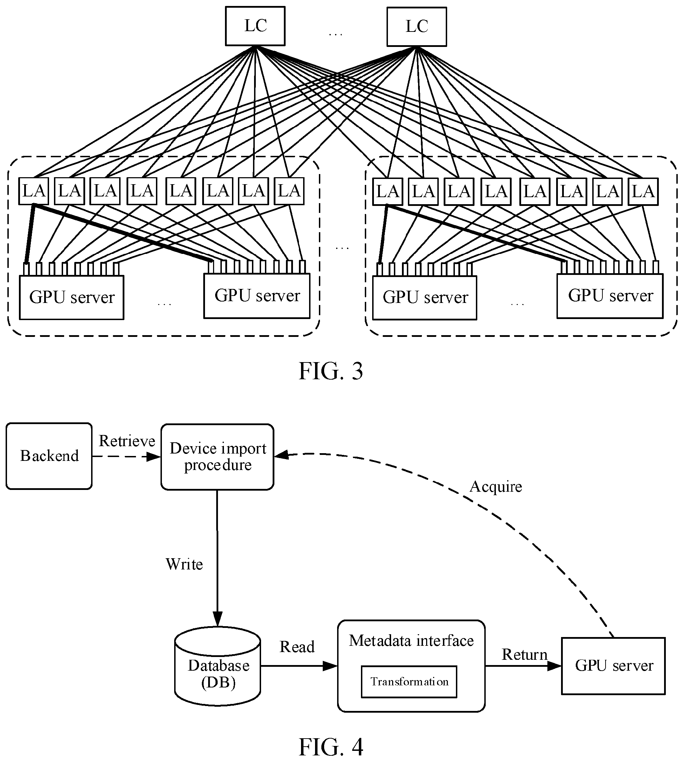

As shown in FIG. 3, a plurality of LA devices in the same dashed line may form an LA device group, and the LA devices in each LA device group may be connected to LC devices and cloud computing devices. The cloud computing devices may be GPU servers in FIG. 3, and each of the GPU servers may include eight GPU cards. The GPU servers in the same LA device group may communicate with each other by using an RDMA technology without using the LC devices. The GPU servers in different LA device groups can perform RDMA communication only by using the LC devices and the LA devices. RDMA communication of the GPU servers in the same LA device group has a smaller network delay and less traffic consumption than that of the GPU servers in different LA device groups.

For example, any one of the cloud computing devices is any one of cloud computing devices associated with the terminal device. After the cloud management device allocates the cloud computing devices to the terminal device, the terminal device is associated with the allocated cloud computing devices.

In some embodiments, before operation 201, the cloud management device may perform the following operation A1.

Operation A1: The cloud management device may acquire the device identifiers of the cloud computing devices and the identifier of the associated LA device group, and store the association relationship between the device identifiers of the cloud computing devices and the identifier of the LA device group.

For example, when the cloud computing devices in the computing cluster are newly launched, that is, the cloud computing devices are classified into the LA device groups of the computing cluster and have not been allocated to a client, the cloud management device may acquire the device identifiers of the cloud computing devices and the identifier of the associated LA device group, and associatively store the device identifiers of the cloud computing devices and the identifier of the LA device group. For example, the device identifiers and the identifier of the LA device group are associatively stored into a database (DB) of the cloud management device in a key-value manner.

For example, the device identifier of the cloud computing device may be an Internet protocol (IP) address of the cloud computing device. The identifier of the LA device group may be an identity (ID) of the LA device group. Certainly, the cloud management device may acquire other information of the associated LA device group, for example, a name of the LA device group, and a total quantity of cloud computing devices associated with the LA device group. This is not limited in this application.

In this operation, the cloud computing devices may transmit the second obtaining request to the cloud management device. For example, the cloud computing devices may transmit the second obtaining request to the cloud management device through a Metadata interface.

For the second obtaining request transmitted by any one of the cloud computing devices, the cloud management device may obtain, based on a device identifier of the any one of the cloud computing devices, from the pre-stored association relationship, the identifier of the LA device group associated with the device identifier of the any one of the cloud computing devices.

Operation 202: The cloud management device determines the LA device group identification information based on the identifier of the LA device group associated with any one of the cloud computing devices, and returns the LA device group identification information to the any one of the cloud computing devices.

In this operation, the cloud management device may perform transformation on the identifier of the LA device group associated with any one of the cloud computing devices, to obtain the LA device group identification information. The transformation may be processing configured for masking (that is, processing sensitive (for security) information into insensitive information) on the identifier of the LA device group. The LA device group identification information is configured for indicating an identifier of an LA device group associated with cloud computing devices. Cloud computing devices in different LA device groups have different LA device group identification information.

In some embodiments, for any one of the cloud computing devices, the LA device group identification information corresponding to the cloud computing device is obtained by performing operation B1 by the cloud management device. That is, an implementation of the determining the LA device group identification information based on the identifier of the LA device group associated with the any one of the cloud computing devices includes the following operation B1.

Operation B1: Perform transformation on the identifier of the LA device group associated with the cloud computing device, to obtain an implicit indication value of the identifier of the LA device group, and use the implicit indication value as the LA device group identification information corresponding to the cloud computing device.

For example, the cloud management device may perform transformation on the identifier of the LA device group based on a pre-configured mapping transformation algorithm, to obtain the LA device group identification information. For example, a hash value of the ID of the LA device group may be calculated by using a hash algorithm.

Based on this, an original ID identifier of the LA device group is hidden by using the LA device group identification information while maintaining the ability to distinguish different LA device groups, to implement masking processing on the real ID identifier of the LA device group on a cloud, and ensure network security of the computing cluster on the cloud as far as possible.

Correspondingly, corresponding to a process of the foregoing operations 201 to 202, on a side of any one of the cloud computing devices, before operation 201, the any one of the cloud computing devices may perform operation C1.

Operation C1: The any one of the cloud computing devices transmits the second obtaining request to the cloud management device of the computing cluster.

After operation 202, any one of the cloud computing devices may perform operation D1.

Operation D1: The any one of the cloud computing devices receives the LA device group identification information returned by the cloud management device based on the second obtaining request.

As shown in FIG. 4, at a launch stage of the cloud computing device, for example, when the GPU server is launched, a device import procedure may be performed. When a backend management device retrieves and performs the device import procedure, the identifier of the LA device group in which the cloud computing device is located is acquired, and the device identifier of the cloud computing device and the identifier of the LA device group are written into the database (DB) in the key-value manner. In FIG. 4, the cloud computing device may access a backend in the database DB through the Metadata interface. After access through the Metadata interface and transformation (for example, encryption), the LA device group identification information, for example, the hash value of the identifier of the LA device group, is obtained, to return the LA device group identification information obtained through transformation to the cloud computing device.

When any one of the cloud computing devices is allocated to the terminal device, for example, to a user computing cluster of a user of the terminal device, the terminal device is associated with any one of the cloud computing devices. The terminal device may obtain the LA device group identification information of any one of the cloud computing devices through the following interaction process of operations 203 to 205. Based on this, the terminal device obtains the LA device group identification information of the cloud computing device associated with the terminal device.

Operation 203: The terminal device transmits a first obtaining request to the cloud computing devices associated with the terminal device.

The first obtaining request is configured for requesting to obtain the LA device group identification information corresponding to the cloud computing devices. For example, the terminal device may transmit the first obtaining request to the associated cloud computing devices by using a secure shell (SSH) protocol.

In some embodiments, the cloud computing devices associated with the terminal device may be pre-allocated to the terminal device by the cloud management device. The allocation may include the following interaction operation E1 to operation E5.

Operation E1: The terminal device transmits an allocation request to the cloud management device, the allocation request being configured for requesting to allocate cloud computing devices to the terminal device.

In some embodiments, the allocation request is a creation request, and the creation request is configured for requesting to create a user computing cluster for the terminal device.

For example, creating a user computing cluster is a process of allocating at least one cloud computing device to the terminal device and constructing the allocated cloud computing device as a user computing cluster associated with the terminal device.

For example, the user may trigger a creation operation on the terminal device, for example, the user may trigger, on the terminal device, a configuration operation with regard to a device quantity, a cluster name, an available region, and the like of the to-be-created user computing cluster. If the user does not have a user computing cluster, the user may apply to create a new user computing cluster through the creation operation. Certainly, if the user already has the user computing cluster, the user computing cluster may also be created as needed. In one example, instance RDMA networks in the same user computing cluster may be connected to each other, and instance RDMA networks across user computing clusters are separated from each other.

In some other embodiments, the allocation request is a capacity expansion request, and the capacity expansion request is configured for requesting to add a cloud computing device to the user computing cluster of the terminal device.

For example, if the user already has the user computing cluster, the user may also trigger a capacity expansion operation on the terminal device, to increase a quantity of cloud computing devices in the existing user computing cluster.

Operation E2: The cloud management device receives the allocation request of the terminal device.

After receiving the allocation request, the cloud management device may allocate the cloud computing devices to the terminal device through the following operation E3 to operation E4. That is, the cloud computing devices associated with the terminal device are determined by the cloud management device through the following operation E3 to operation E4.

Operation E3: The cloud management device determines a quantity of idle cloud computing devices that are associated with the LA device groups and that are in an idle state.

The idle state means that the cloud computing devices have not been allocated to any client.

Operation E4: The cloud management device determines an allocation order of the LA device groups based on the idle device quantity of the LA device groups, and sequentially selects, in the allocation order of the LA device groups, cloud computing devices from cloud computing devices associated with at least one LA device group, to allocate the cloud computing devices to the terminal device.

In this operation, based on two cases of the allocation request, an implementation of operation E4 is correspondingly divided into the following case 1 and case 2.

Case 1: The allocation request is a creation request. Correspondingly, the implementation of operation E4 may include operations E41 to E42.

Operation E41: Arrange the LA device groups in descending order based on the idle device quantity of the LA device groups, to obtain a first LA device group sequence.

The idle device quantity is a quantity of cloud computing devices in an idle state among the cloud computing devices in the LA device group. In this operation, the LA device groups may be arranged in descending order of the idle device quantity, to obtain the first LA device group sequence. In other words, in the first LA device group sequence, a higher order of an LA device group indicates a larger idle device quantity of the LA device group.

Operation E42: Use an arrangement order of the LA device groups in the first LA device group sequence as the allocation order, sequentially select the cloud computing devices from the cloud computing devices associated with the at least one LA device group, and construct the user computing cluster for the terminal device based on the selected cloud computing devices.

In this operation, the cloud computing devices may be sequentially selected from the LA device groups in descending order of the idle device quantity. For example, if a device quantity of the user computing cluster that needs to be created is a first quantity, the cloud computing devices are selected preferentially from an LA device group having a large idle device quantity in descending order of the idle device quantity, until the first quantity of cloud computing devices are selected. Accordingly, when the user computing cluster is created, the cloud computing devices are selected preferentially from the LA device group having a large idle device quantity, to evenly allocate user computing clusters to different LA device groups as far as possible, thereby improving processing efficiency of the user computing clusters.

In some embodiments, when an idle device quantity of an LA device group is the same as a total quantity of cloud computing devices in the LA device group, all the associated cloud computing devices are in an idle state, the LA device group is an idle LA device group and has a largest idle device quantity, and the cloud computing devices are selected preferentially from the idle LA device group.

In some embodiments, for the LA device groups having the same idle device quantity, the cloud computing devices may further be selected preferentially from an LA device group having a small quantity of corresponding clients (that is, an LA device group in which the cloud computing devices belong to a small total quantity of user computing clusters). Correspondingly, operation E42 of using an arrangement order of the LA device groups in the first LA device group sequence as the allocation order, and sequentially selecting the cloud computing devices from the cloud computing devices associated with the at least one LA device group includes the following operation E42-1 and operation E42-2.

Operation E42-1: If the first LA device group sequence includes at least two LA device groups having the same idle device quantity, arrange the at least two LA device groups in the first LA device group sequence in ascending order based on a quantity of user computing clusters corresponding to each of the at least two LA device groups, to obtain a second LA device group sequence.

The quantity of user computing clusters (also referred to as a quantity of clients) corresponding to the LA device group is a quantity of user computing clusters to which the cloud computing devices in the LA device group belong.

Operation E42-2: Use an arrangement order of the LA device groups in the second LA device group sequence as the allocation order, and sequentially select the cloud computing devices from the cloud computing devices associated with the at least one LA device group.

For example, in the first LA device group sequence, an LA device group a and an LA device group b are respectively located in a first position and a second position, the LA device group a and the LA device group b each are associated with 100 cloud computing devices, and an idle device quantity is 60. 40 allocated cloud computing devices in the LA device group a are allocated to three clients in total. 40 allocated cloud computing devices in the LA device group b are allocated to two clients in total. Therefore, in the first LA device group sequence, an order of the LA device group b is adjusted to be ahead of the LA device group a, and after the adjustment, the LA device group a is located in the second position, and the LA device group b is located in the first position, so that the cloud computing devices are selected for the terminal device preferentially from 60 idle cloud computing devices associated with the LA device group b.

In some embodiments, the cloud computing devices may be selected from the idle LA device group first, and operation E41 is performed only when there is no idle LA device group or the idle LA device group does not have enough devices. Correspondingly, an implementation of operation E41 may include the following operation E41-1, operation E41-2, and operation E41-3.

Operation E41-1: Search the LA device groups for the idle LA device group, all cloud computing device associated with the idle LA device group being in an idle state.

Operation E41-2: If the idle LA device group exists in the LA device groups, select cloud computing devices from the cloud computing devices associated with the idle LA device group, and construct the user computing cluster for the terminal device based on the selected cloud computing devices.

Operation E41-3: If no idle LA device group exists in the LA device groups, arrange the LA device groups in descending order based on the idle device quantity of the LA device groups, to obtain the first LA device group sequence.

For example, if the LA device groups are associated with the same total quantity of devices, the idle LA device group has a largest idle device quantity, so that the idle LA device group may be searched for first, and the cloud computing devices are selected preferentially from the idle LA device group. If no idle LA device group exists, the operation of arranging the LA device groups in descending order based on the idle device quantity is performed.

In some embodiments, if the idle LA device group exists in the LA device groups, operation E41-2 and operation E41-3 may be further performed based on a total quantity of devices in the idle LA device group and a quantity of devices needed by the to-be-created user computing cluster. The quantity of devices needed by the to-be-created user computing cluster is the first quantity. Correspondingly, the process may include the following operations.

If the idle LA device group exists in the LA device groups, and the total quantity of devices in the idle LA device group is not less than the first quantity, select the first quantity of cloud computing devices from the cloud computing devices associated with the idle LA device group, to construct a user computing cluster including the first quantity of cloud computing devices.

If the idle LA device group exists in the LA device groups, and the total quantity of devices in the idle LA device group is less than the first quantity, select all the cloud computing devices from the cloud computing devices associated with the idle LA device group, and arrange the LA device groups in descending order based on an idle device quantity of non-idle LA device groups in the LA device groups, to obtain the first LA device group sequence; and use the arrangement order of the LA device groups in the first LA device group sequence as the allocation order, sequentially select a remaining quantity of cloud computing devices from the cloud computing devices associated with the at least one LA device group, to construct a user computing cluster including the first quantity of cloud computing devices, a sum of the remaining quantity and the total quantity of devices in the idle LA device group being the first quantity.

If no idle LA device group exists in the LA device groups, arrange the LA device groups in descending order based on the idle device quantity of the LA device groups, to obtain the first LA device group sequence; use the arrangement order of the LA device groups in the first LA device group sequence as the allocation order, and sequentially select the first quantity of cloud computing devices from the cloud computing devices associated with the at least one LA device group, to construct a user computing cluster including the first quantity of cloud computing devices.

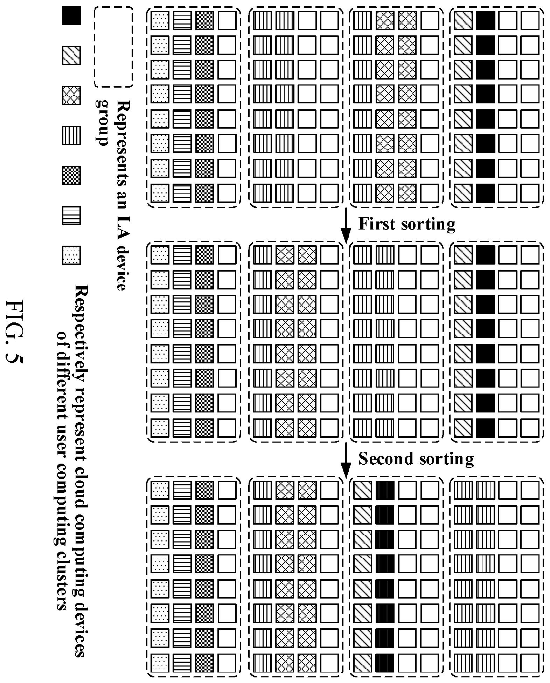

As shown in Figure 5, a dashed box represents an LA device group, and each square within the dashed box represents a cloud computing device. Squares with different fill patterns or colors represent cloud computing devices of different user computing clusters, and blank squares without any fill pattern or color represent cloud computing devices in an idle state. Currently, the LA device groups do not include an idle LA device group, and sorting may be performed twice. During first sorting, the LA device groups are arranged in descending order based on an idle device quantity, and an LA device group having a large idle device quantity is positioned at the front. During second sorting, the LA device groups are arranged in ascending order based on a quantity of user computing clusters, and an LA device group having a small quantity of user computing clusters is positioned at the front. Based on this, an allocation strategy in a creation use scenario may be configured as the following.

Select cloud computing devices preferentially from an idle LA device group.

If there is no idle LA device group, select the cloud computing devices preferentially from an LA device group having an idle device quantity that can meet a quantity of devices needed by a user computing cluster.

If there are a plurality of LA device groups that can meet the quantity of devices needed by the user computing cluster, select the cloud computing devices preferentially from an LA device group having a small quantity of corresponding user computing clusters.

If there is no LA device group that can meet the quantity of devices needed by the user computing cluster, select the cloud computing devices preferentially from an LA device group having a largest idle device quantity.

Case 2: The allocation request is a capacity expansion request. Correspondingly, the implementation of operation E4 may include operations E43 to E44.

Operation E43: Arrange associated LA device groups in ascending order based on an idle device quantity of the associated LA device groups in the LA device groups, to obtain a third LA device group sequence, cloud computing devices associated with the associated LA device groups including the cloud computing devices that have been allocated to the terminal device.

Operation E44: Use an arrangement order of the associated LA device groups in the third LA device group sequence as the allocation order, and sequentially select the cloud computing devices from at least one associated LA device group, to allocate the cloud computing devices to the terminal device.

For example, for an allocation scenario of capacity expansion, an LA device group (also referred to as an associated LA device group) in which all the cloud computing devices in the user computing cluster are located may be searched for, and the associated LA device groups are sorted in ascending order of the idle device quantity of the associated LA device groups. The cloud computing devices are allocated preferentially from an LA device group having a small idle device quantity, so that cloud computing devices of one client fall within the same LA device group as far as possible, that is, the cloud computing devices in the LA device group belong to one user as far as possible. Accordingly, when the user computing cluster is expanded, the cloud computing devices are selected preferentially from the LA device group to which the user computing cluster belongs, to concentrate the same user computing cluster into the same LA device group as far as possible, thereby improving processing efficiency of the user computing cluster.

For example, a user computing cluster of a user A needs to be expanded by three cloud computing devices, and LA device groups in which cloud computing devices of the user A are located include a group 1, a group 2, and a group 3. An idle device quantity of the group 1 is 6, an idle device quantity of the group 2 is 8, and an idle device quantity of the group 3 is 3, which are arranged in ascending order of the idle device quantity: the group 3 < the group 1 < the group 2. Therefore, the three cloud computing devices are selected preferentially from the group 3.

Operations E41 to E42 and operations E43 to E44 are respectively allocation operations in two allocation scenarios. This application does not limit a sequence of operations E41 to E42 and a sequence of operations E43 to E44, that is, operations E41 to E42 may be performed before operations E43 to E44, or may be performed after operations E43 to E44.

Operation E5: The cloud management device returns device identifiers of the allocated cloud computing devices to the terminal device.

The cloud management device may deduct the allocated cloud computing devices from the cloud computing devices in the computing cluster, and transmit, to the terminal device, the device identifiers of the cloud computing devices allocated to the terminal device. Therefore, the process may alternatively be referred to as a process of deduction and bin packing.

Operation E6: The terminal device receives the device identifiers of the cloud computing devices returned by the cloud management device, and obtain, based on the device identifiers of the cloud computing device, the cloud computing devices associated with the terminal device.

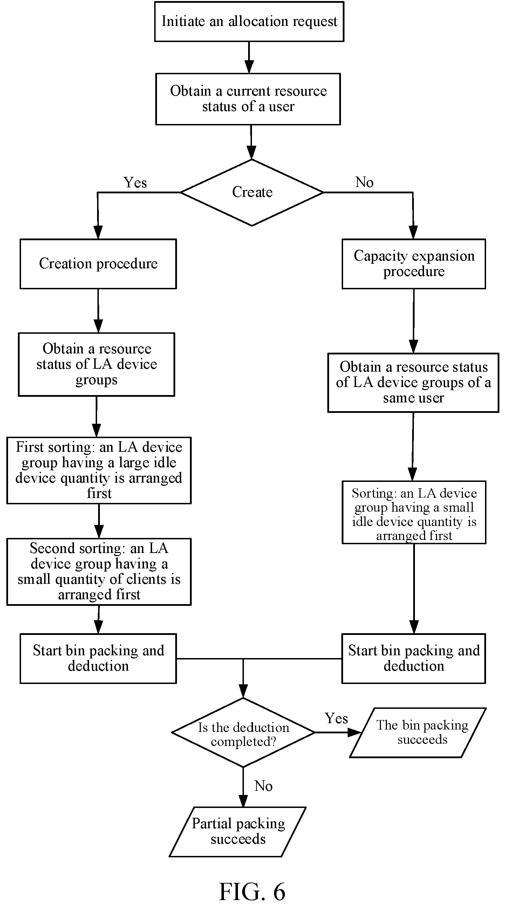

The allocation process in the foregoing operations E1 to E6 is described below with reference to a procedure shown in FIG. 6.

As shown in FIG. 6, the allocation process includes the following procedure.
(1) A terminal device initiates an allocation request.
(2) A cloud management device may obtain a current resource status of a user of the terminal device, for example, the terminal device has a user computing cluster or has not created a user computing cluster.
(3) The cloud management device determines whether the allocation request is a creation request.
(4) If the allocation request is the creation request, the cloud management device may perform a creation procedure. Specifically, sorting may be performed twice. During first sorting, LA device groups are arranged in descending order based on an idle device quantity, and an LA device group having a large idle device quantity is at the front. During second sorting, the LA device groups are arranged in ascending order based on a quantity of user computing clusters, and an LA device group having a small quantity of user computing clusters is at the front. In addition, (6) is performed.
(5) For a capacity expansion request, the cloud management device may perform a capacity expansion procedure. Specifically, an LA device group resource status of the user may be obtained. Specifically, LA device groups associated with cloud computing device of the user may be obtained, an idle device quantity of the associated LA device groups is obtained, and sorting is performed: the LA device groups are arranged in ascending order based on the idle device quantity, and an LA device group having a small idle device quantity is at the front. In addition, (6) is performed.
(6) The cloud management device selects, in an order of the LA device groups obtained through sorting, cloud computing devices to allocate the cloud computing devices to the terminal device, that is, starts a process of bin packing and deduction.
(7) The cloud management device determines whether the deduction is completed, and if the deduction is completed, the bin packing succeeds, that is, allocation succeeds. If the deduction is not completed, it indicates that some cloud computing devices have been successfully selected. Further, a corresponding procedure may further be performed again for allocation, until the bin packing succeeds.

Operation 204: The cloud computing device receives the first obtaining request transmitted by the terminal device, and returns the LA device group identification information of the any one of the cloud computing devices to the terminal device based on the first obtaining request.

The LA device group identification information is determined based on the identifier of the LA device group associated with the cloud computing device. In this operation, the cloud computing device may return the LA device group identification information of the cloud computing device to the terminal device based on the SSH protocol.

In some embodiments, the terminal device may perform operation 203 in response to triggering of a target event. The target event includes at least one of the following:
receiving device identifiers of cloud computing devices allocated by the cloud management device;
receiving device identifiers of a changed cloud computing device transmitted by the cloud management device; and
detecting that current time reaches a target time period.

In one example, when the terminal device receives the device identifiers of the cloud computing devices allocated by the cloud management device, the terminal device may transmit the first obtaining request to the cloud computing devices allocated by the cloud management device. For example, when a user computing cluster is created, the first obtaining request may be transmitted to cloud computing devices in the created user computing cluster. For another example, when an existing user computing cluster is expanded, the first obtaining request may alternatively be transmitted to a newly added cloud computing device.

In one example, the changed cloud computing device may be a faulty cloud computing device. For example, if a device A is faulty, the cloud management device may return a device identifier of the device A and a device identifier of a replacement device B of the device A to the terminal device, and the terminal device may transmit a first obtaining request to the replacement device B, and may further locally delete LA device group identification information of the device A.

In one example, the terminal device may further periodically update the LA device group identification information of the cloud computing devices. For example, the first obtaining request is periodically transmitted to the cloud computing devices every target time period. For example, the LA device group identification information of the cloud computing devices may be periodically detected, and the first obtaining request is periodically transmitted to a cloud computing device whose LA device group identification information expires or that has not obtained LA device group identification information.

Operation 205: The terminal device receives the LA device group identification information returned by the cloud computing devices associated with the terminal device.

The terminal device may receive, based on the SSH protocol, the LA device group identification information returned by the cloud computing devices associated with the terminal device. Based on this, the terminal device may obtain a distribution status of the LA device groups of the associated cloud computing devices.

In a transmission and receiving processes of operations 204 and 205, the LA device group identification information is information obtained through transformation performed on the identifier of the LA device group by the cloud management device, and is information obtained through transformation performed on the original identifier of the LA device group. Therefore, security of information of a cloud network in a network transmission process is greatly improved, and a requirement of the client to obtain the LA device group identification information in time is met.

Operation 206: The terminal device sorts the cloud computing devices associated with the terminal device based on the LA device group identification information, to use, in the order obtained through sorting, the cloud computing devices associated with the terminal device for computing.

The terminal device may arrange the cloud computing devices in ascending order based on the LA device group identification information, for example, based on the implicit indication value of the identifier of the LA device group, so that the cloud computing devices in the same LA device group are adjacent. Based on this, the cloud computing devices may be sequentially used in the order obtained through sorting for computing of the related service. For example, in a related service using a Ring-Allreduce algorithm, computing nodes are circularly arranged, and in a computing process of the related service, data exchange, for example, intermediate computing data transmission, needs to be performed between the circularly arranged computing nodes. Therefore, the cloud computing devices may be used in the order obtained through sorting. Based on this, it is helpful to obtain cloud computing devices in the same LA device group that are concentrated to perform computing by using the Ring-Allreduce algorithm. That is, the circularly arranged computing nodes are located in the same LA device group, to greatly reduce a network delay in the computing process by using the Ring-Allreduce algorithm, thereby greatly reducing traffic consumption, and ensuring high efficiency of the computing process.

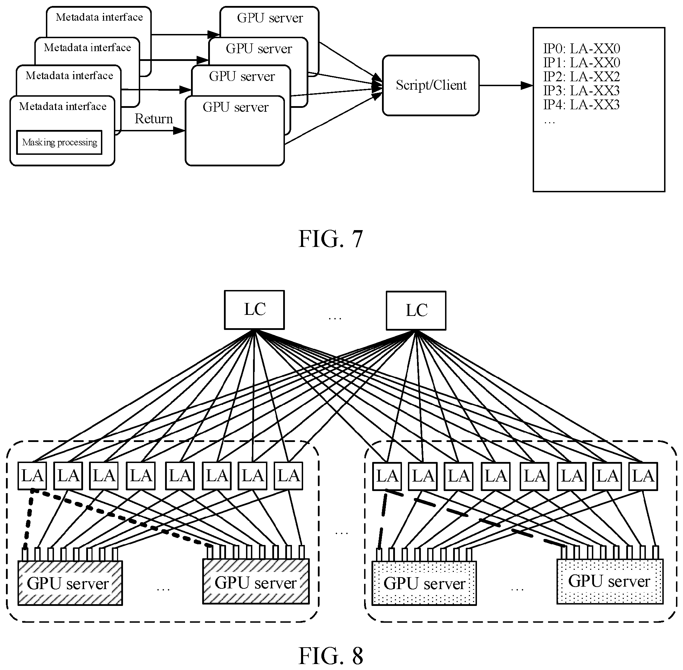

As shown in FIG. 7, cloud computing devices may obtain, through a Metadata interface, LA device group identification information obtained through transformation, and return the LA device group identification information to a client. The client sorts IP addresses of the cloud computing devices based on the LA device group identification information, and IP addresses of cloud computing devices having the same LA device group identification information are concentrated.

As shown in FIG. 8, rectangles with the same fill pattern represent devices associated with the same client. In FIG. 8, GPU servers associated with the same client are distributed in the same LA device group. However, as time goes by, with adjustment, for example, capacity expansion, capacity shrinking, or machine migration caused by a fault, of resources associated with the client, distribution of the GPU servers of the same client in the LA device groups gradually becomes fragmented. Specifically, the GPU servers of the same client may be distributed in different LA device groups. Based on this, communication between the GPU servers of the same client needs to cross the LA device groups, which may lead to a network delay. However, according to this embodiment of the present application, the terminal device may arrange GPU devices based on the LA device group identification information, to concentrate the cloud computing devices in the same LA device group. Based on this, when the client uses the cloud computing devices in order for computing, the cross-LA device group RDMA communication between the cloud computing devices can be greatly reduced, to minimize traffic detouring, and reduce the network delay and traffic consumption.

According to the data processing method in this application, the computing cluster includes the plurality of LC devices, the plurality of LA device groups associated with each of the LC devices, and the plurality of cloud computing devices associated with each of the LA device groups, the cloud computing devices associated with the same LA device group communicating with each other based on the LA of the LA device group, and the cloud computing devices associated with different LA device groups communicating with each other based on the LA devices of the corresponding LA device groups and the associated LC. The terminal device transmits the first obtaining request to the associated cloud computing devices, to obtain the LA device group identification information of the cloud computing devices associated with the terminal device. In addition, the cloud computing devices are sorted based on the LA device group identification information, so that the cloud computing devices are used, in the order obtained through sorting, for computing. The cloud computing devices in the same LA device group are concentrated after sorting, which facilitates use of the cloud computing devices in the same LA device group for computing, thereby greatly reducing cross-LA device group communication between the cloud computing devices, minimizing traffic detouring, and reducing the network delay and traffic consumption.

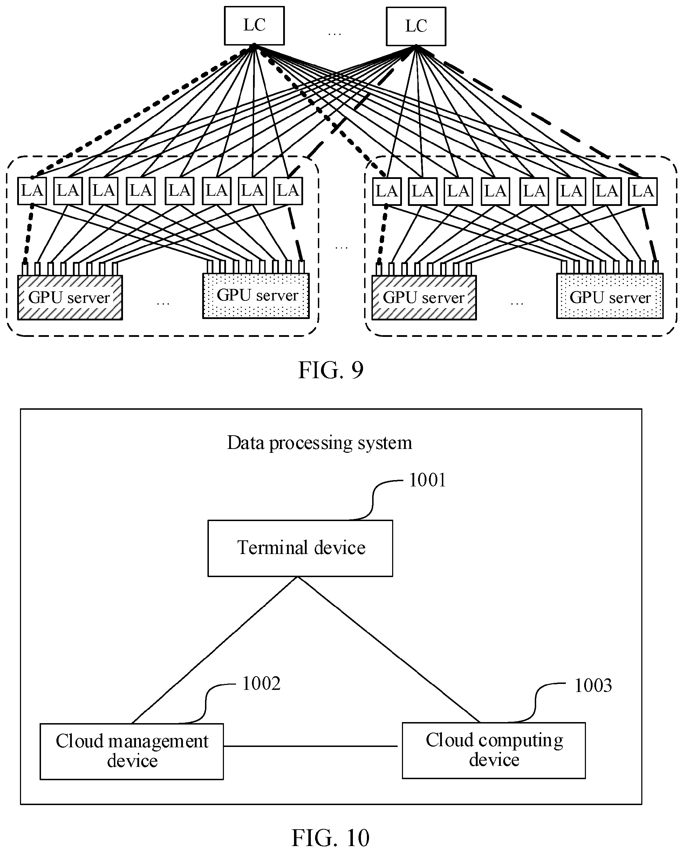

FIG. 10 is a schematic structural diagram of a data processing system according to an embodiment of this application. As shown in FIG. 10, the system includes: a terminal device 1001 of a computing cluster, a cloud management device 1002, and any one of cloud computing devices 1003 associated with the terminal device.

The computing cluster includes a plurality of aggregation devices (LC devices), a plurality of access device (LA) groups associated with each of the LC devices, and a plurality of cloud computing devices associated with each of the LA device groups, each of the LA device groups including a plurality of LA devices, cloud computing devices associated with the same LA device group communicating with each other based on an LA of the LA device group, and cloud computing devices associated with different LA device groups communicating with each other based on the LA devices of the corresponding LA device groups and an associated LC.

The cloud management device 1002 is configured to determine, when receiving a second obtaining request transmitted by any one of the cloud computing devices, based on a pre-configured association relationship between device identifiers of the cloud computing devices and identifiers of LA device groups, an identifier of an LA device group associated with any one of the cloud computing devices.

The cloud management device 1002 is configured to determine the LA device group identification information based on the identifier of the LA device group associated with any one of the cloud computing devices, and return the LA device group identification information to any one of the cloud computing devices.

The terminal device 1001 is configured to transmit a first obtaining request to cloud computing devices associated with the terminal device, the first obtaining request being configured for requesting to obtain LA device group identification information corresponding to a cloud computing device.

The any one of the cloud computing devices 1003 is configured to receive the first obtaining request transmitted by the terminal device, and return the LA device group identification information of the any one of the cloud computing devices to the terminal device based on the first obtaining request, the LA device group identification information being determined based on the identifier of the LA device group associated with the cloud computing device.

The terminal device 1001 is configured to receive the LA device group identification information returned by the cloud computing devices associated with the terminal device.

The terminal device 1001 is configured to sort the cloud computing devices associated with the terminal device based on the LA device group identification information, to use, in an order obtained through sorting, the cloud computing devices associated with the terminal device for computing.

According to the data processing method in this application, the computing cluster includes the plurality of LC devices, the plurality of LA device groups associated with each of the LC devices, and the plurality of cloud computing devices associated with each of the LA device groups, the cloud computing devices associated with the same LA device group communicating with each other based on the LA of the LA device group, and the cloud computing devices associated with different LA device groups communicating with each other based on the LA devices of the corresponding LA device groups and the associated LC. The terminal device transmits the first obtaining request to the associated cloud computing devices, to obtain the LA device group identification information of the cloud computing devices associated with the terminal device. In addition, the cloud computing devices are sorted based on the LA device group identification information, so that the cloud computing devices are used, in the order obtained through sorting, for computing. The cloud computing devices in the same LA device group are concentrated after sorting, which facilitates use of the cloud computing devices in the same LA device group for computing, thereby greatly reducing cross-LA device group communication between the cloud computing devices, minimizing traffic detouring, and reducing a network delay and traffic consumption.

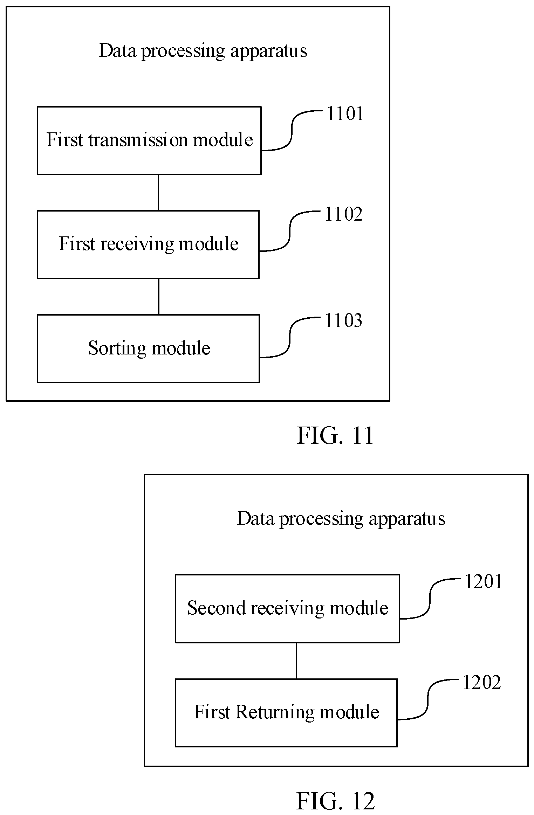

FIG. 11 is a schematic structural diagram of a data processing apparatus according to an embodiment of this application. The apparatus is applied to a terminal device, and the terminal device is an application client of a computing cluster. The computing cluster includes a plurality of aggregation devices (LC devices), a plurality of access device (LA) groups associated with each of the LC devices, and a plurality of cloud computing devices associated with each of the LA device groups, each of the LA device groups including a plurality of LA devices, cloud computing devices associated with the same LA device group communicating with each other based on the an LA of the LA device group, and cloud computing devices associated with different LA device groups communicating with each other based on LA devices of the corresponding LA device groups and an associated LC. As shown in FIG. 11, the apparatus includes:
a first transmission module 1101, configured to transmit a first obtaining request to cloud computing devices associated with the terminal device, the first obtaining request being configured for requesting to obtain LA device group identification information corresponding to a cloud computing device;
a first receiving module 1102, configured to receive the LA device group identification information returned by the cloud computing devices associated with the terminal device, the LA device group identification information being determined based on an identifier of an LA device group associated with a cloud computing device; and
a sorting module 1103, configured to sort the cloud computing devices associated with the terminal device based on the LA device group identification information, to use, in an order obtained through sorting, the cloud computing devices associated with the terminal device for computing.

In some embodiments, the data processing apparatus applied to a cloud management device of the computing cluster includes an LA device group identification information determining module. For any one of the cloud computing devices, the LA device group identification information determining module, when configured to determine the LA device group identification information corresponding to the cloud computing device, is specifically configured to:
perform transformation on an identifier of an LA device group associated with the cloud computing device, to obtain an implicit indication value of the identifier of the LA device group, and use the implicit indication value as the LA device group identification information corresponding to the cloud computing device.

In some embodiments, the apparatus further includes:
a second transmission module, configured to transmit an allocation request to the cloud management device of the computing cluster, the allocation request being configured for requesting to allocate a cloud computing device to the terminal device; and
a third receiving module, configured to receive device identifiers of the cloud computing devices returned by the cloud management device, and obtain, based on the device identifiers of the cloud computing devices, the cloud computing devices associated with the terminal device.

The data processing apparatus applied to the cloud management device includes a cloud computing device determining module, and the cloud computing device determining module, when configured to determine the cloud computing devices associated with the terminal device, includes:
a first determining unit, configured to determine a quantity of idle cloud computing devices that are associated with the LA device groups and that are in an idle state;
an allocation unit, configured to determine an allocation order of the LA device groups based on the idle device quantity of the LA device groups, and sequentially selects, in the allocation order of the LA device groups, cloud computing devices from cloud computing devices associated with at least one LA device group, to allocate the cloud management devices to the terminal device.

In some embodiments, the allocation request is a creation request, and the creation request is configured for requesting to create a user computing cluster for the terminal device.

The allocation unit is configured to:
arrange the LA device groups in descending order based on the idle device quantity of the LA device groups, to obtain a first LA device group sequence; and
use an arrangement order of the LA device groups in the first LA device group sequence as the allocation order, sequentially select the cloud computing devices from the cloud computing devices associated with the at least one LA device group, and construct the user computing cluster for the terminal device based on the selected cloud computing devices.

In some embodiments, the allocation unit, when using the arrangement order of the LA device groups in the first LA device group sequence as the allocation order, and sequentially selecting the cloud computing devices from the cloud computing devices associated with the at least one LA device group, is specifically configured to:
arrange, if the first LA device group sequence includes at least two LA device groups having the same idle device quantity, the at least two LA device groups in the first LA device group sequence in ascending order based on a quantity of user computing clusters corresponding to each of the at least two LA device groups, to obtain a second LA device group sequence, the quantity of user computing clusters is a quantity of clients associated with the cloud computing devices associated with the LA device groups; and
use an arrangement order of the LA device groups in the second LA device group sequence as the allocation order, and sequentially select the cloud computing devices from the cloud computing devices associated with the at least one LA device group.

In some embodiments, the allocation unit, when arranging the LA device groups in descending order based on the idle device quantity of the LA device groups, to obtain the first LA device group sequence, is specifically configured to:
search the LA device groups for an idle LA device group, all cloud computing device associated with the idle LA device group being in an idle state;
select, if the idle LA device group exists in the LA device groups, a cloud computing device from the cloud computing devices associated with the idle LA device group, and construct the user computing cluster for the terminal device based on the selected cloud computing device; and
arrange, if no idle LA device group exists in the LA device groups, the LA device groups in descending order based on the idle device quantity of the LA device groups, to obtain the first LA device group sequence.

In some embodiments, the allocation request is a capacity expansion request, and the capacity expansion request is configured for requesting to add a cloud computing device to the user computing cluster of the terminal device.

The allocation unit is configured to:
arrange associated LA device groups in ascending order based on an idle device quantity of the associated LA device groups in the LA device groups, to obtain a third LA device group sequence, cloud computing devices associated with the associated LA device groups including the cloud computing devices that have been allocated to the terminal device; and
use an arrangement order of the associated LA device groups in the third LA device group sequence as the allocation order, and sequentially select the cloud computing devices from at least one associated LA device group, to allocate the cloud computing devices to the terminal device.

According to the data processing method in this application, the computing cluster includes the plurality of LC devices, the plurality of LA device groups associated with each of the LC devices, and the plurality of cloud computing devices associated with each of the LA device groups, the cloud computing devices associated with the same LA device group communicating with each other based on the LA of the LA device group, and the cloud computing devices associated with different LA device groups communicating with each other based on the LA devices of the corresponding LA device groups and the associated LC. The terminal device transmits the first obtaining request to the associated cloud computing devices, to obtain the LA device group identification information of the cloud computing devices associated with the terminal device. In addition, the cloud computing devices are sorted based on the LA device group identification information, so that the cloud computing devices are used, in the order obtained through sorting, for computing. The cloud computing devices in the same LA device group are concentrated after sorting, which facilitates use of the cloud computing devices in the same LA device group for computing, thereby greatly reducing cross-LA device group communication between the cloud computing devices, minimizing traffic detouring, and reducing a network delay and traffic consumption.

FIG. 12 is a schematic structural diagram of a data processing apparatus according to an embodiment of this application. The apparatus is applied to any one of cloud computing devices that is in a computing cluster and that is associated with a terminal device, and the computing cluster includes a plurality of LC devices, a plurality of LA device groups associated with each of the LC devices, and a plurality of cloud computing devices associated with each of the LA device groups.

Each of the LA device groups includes a plurality of LA devices, cloud computing devices associated with the same LA device group communicate with each other based on an LA of the LA device group, and cloud computing devices associated with different LA device groups communicate with each other based on LA devices of the corresponding LA device groups and an associated LC.

As shown in FIG. 12, the apparatus includes:
a second receiving module 1201, configured to receive a first obtaining request transmitted by the terminal device, the first obtaining request being configured for requesting to obtain LA device group identification information corresponding to the any one of the cloud computing devices; and
a first returning module 1202, configured to return the LA device group identification information of the any one of the cloud computing devices to the terminal device based on the first obtaining request, the LA device group identification information being determined based on an identifier of an LA device group associated with the cloud computing device, so that the terminal device sorts the cloud computing devices associated with the terminal device based on the LA device group identification information, to use, in an order obtained through sorting, the cloud computing devices associated with the terminal device for computing.

In some embodiments, the apparatus further includes:
a third transmission module, configured to transmit a second obtaining request to a cloud management device of the computing cluster, the second obtaining request being configured for requesting to obtain the LA device group identification information of the any one of the cloud computing devices; and
a fourth receiving module, configured to receive LA device group identification information returned by the cloud management device based on the second obtaining request.

According to the data processing method in this application, the computing cluster includes the plurality of LC devices, the plurality of LA device groups associated with each of the LC devices, and the plurality of cloud computing devices associated with each of the LA device groups, the cloud computing devices associated with the same LA device group communicating with each other based on the LA of the LA device group, and the cloud computing devices associated with different LA device groups communicating with each other based on the LA devices of the corresponding LA device groups and the associated LC. The terminal device transmits the first obtaining request to the associated cloud computing devices, to obtain the LA device group identification information of the cloud computing devices associated with the terminal device. In addition, the cloud computing devices are sorted based on the LA device group identification information, so that the cloud computing devices are used, in the order obtained through sorting, for computing. The cloud computing devices in the same LA device group are concentrated after sorting, which facilitates use of the cloud computing devices in the same LA device group for computing, thereby greatly reducing cross-LA device group communication between the cloud computing devices, minimizing traffic detouring, and reducing a network delay and traffic consumption.

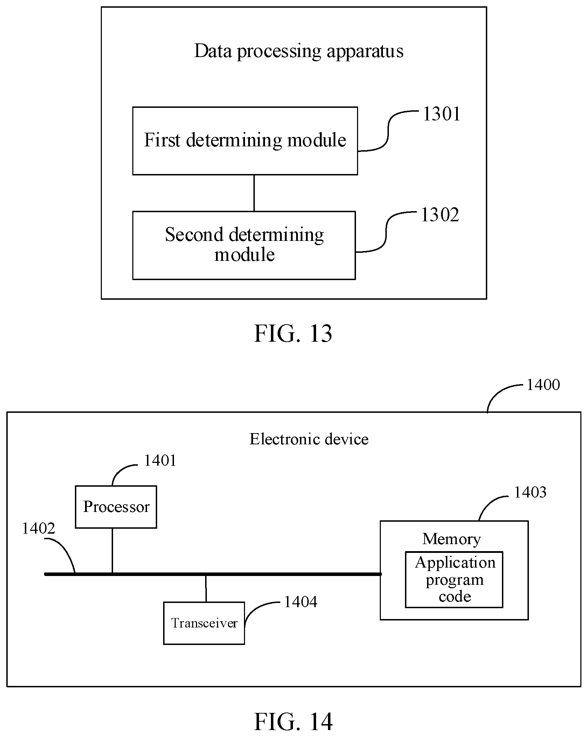

FIG. 13 is a schematic structural diagram of a data processing apparatus according to an embodiment of this application. This application provides the apparatus applied to a cloud management device of a computing cluster, and the computing cluster includes a plurality of LC devices, a plurality of LA device groups associated with each of the LC devices, and a plurality of cloud computing devices associated with each of the LA device groups.

Each of the LA device groups includes a plurality of LA devices, cloud computing devices associated with the same LA device group communicate with each other based on an LA of the LA device group, and cloud computing devices associated with different LA device groups communicate with each other based on LA devices of the corresponding LA device groups and an associated LC.

As shown in FIG. 13, the apparatus includes:
a first determining module 1301, configured to determine, when receiving a second obtaining request transmitted by any one of cloud computing devices, based on a pre-configured association relationship between device identifiers of the cloud computing devices and identifiers of LA device groups, an identifier of an LA device group associated with any one of the cloud computing devices; and
a second determining module 1302, configured to determine LA device group identification information based on the identifier of the LA device group associated with the any one of the cloud computing devices, and return the LA device group identification information to any one of the cloud computing devices, so that the any one of the cloud computing devices performs the following operation:
when receiving a first obtaining request transmitted by an associated target client, return the LA device group identification information of the any one of the cloud computing devices to the terminal device, so that the terminal device sorts the cloud computing devices associated with the terminal device based on the LA device group identification information, to use, in an order obtained through sorting, the cloud computing devices associated with the terminal device for computing.

In some embodiments, the second determining module, when determining the LA device group identification information based on the identifier of the LA device group associated with the any one of the cloud computing devices, is specifically configured to:
perform transformation on an identifier of an LA device group associated with the cloud computing device, to obtain an implicit indication value of the identifier of the LA device group, and use the implicit indication value as the LA device group identification information corresponding to the cloud computing device.

In some embodiments, the apparatus further includes:
an idle device quantity determining module, configured to determine, when receiving an allocation request of the terminal device, a quantity of idle cloud computing devices that are associated with the LA device groups and that are in an idle state, the allocation request being configured for requesting to allocate a cloud computing device to the terminal device;
an allocation module, configured to determine an allocation order of the LA device groups based on the idle device quantity of the LA device groups, and sequentially selects, in the allocation order of the LA device groups, cloud computing devices from cloud computing devices associated with at least one LA device group, to allocate the cloud management devices to the terminal device; and
a second returning module, configured to return device identifiers of the allocated cloud computing devices to the terminal device.

The apparatus in this embodiment of the present application may perform the method provided in some embodiments of this application, and an implementation principle thereof is similar. Actions performed by modules in the apparatus in this embodiment of the present application correspond to operations in the method in some embodiments of this application. For detailed functional descriptions of the modules of the apparatus, refer to descriptions in the corresponding method shown in the foregoing text, and details are not described herein again.

According to the data processing method in this application, the computing cluster includes the plurality of LC devices, the plurality of LA device groups associated with each of the LC devices, and the plurality of cloud computing devices associated with each of the LA device groups, the cloud computing devices associated with the same LA device group communicating with each other based on the LA of the LA device group, and the cloud computing devices associated with different LA device groups communicating with each other based on the LA devices of the corresponding LA device groups and the associated LC. The terminal device transmits the first obtaining request to the associated cloud computing devices, to obtain the LA device group identification information of the cloud computing devices associated with the terminal device. In addition, the cloud computing devices are sorted based on the LA device group identification information, so that the cloud computing devices are used, in the order obtained through sorting, for computing. The cloud computing devices in the same LA device group are concentrated after sorting, which facilitates use of the cloud computing devices in the same LA device group for computing, thereby greatly reducing cross-LA device group communication between the cloud computing devices, minimizing traffic detouring, and reducing a network delay and traffic consumption.

FIG. 14 is a schematic structural diagram of an electronic device according to an embodiment of this application. As shown in FIG. 14, the electronic device includes: a memory, a processor, and a computer program stored on the memory, and the processor executing the computer program to implement operations of the foregoing method.

An embodiment provides an electronic device, as shown in FIG. 14, an electronic device 1400 shown in FIG. 14 includes: a processor 1401 and a memory 1403. The processor 1401 is connected to the memory 1403, for example, through a bus 1402. In some embodiments, the electronic device 1400 may further include a transceiver 1404. The transceiver 1404 is configured for data exchange between the electronic device and another electronic device, such as data transmission and/or data receiving. In one application, the transceiver 1404 is not limited to one, and a structure of the electronic device 1400 does not constitute a limitation on this embodiment of the present application.

The processor 1401 may be a central processing unit (CPU), a general-purpose processor, a digital signal processor (DSP), an application specific integrated circuit (ASIC), a field programmable gate array (FPGA), or another programmable logic device, a transistor logic device, a hardware component, or any combination thereof. The processor may implement or execute various example logical blocks, modules, and circuits described with reference to content disclosed in this application. The processor 1401 may alternatively be a combination to implement a computing function, for example, may be a combination of one or more microprocessors, or a combination of a DSP and a microprocessor.

The bus 1402 may include a path for transmitting information between the foregoing components. The bus 1402 may be a peripheral component interconnect (PCI) bus, an extended industry standard architecture (EISA) bus, or the like. The bus 1402 may be classified as an address bus, a data bus, a control bus, and the like. For ease of representation, in FIG. 14, only one thick line is configured for indicating the bus, but it does not indicate that there is only one bus or one type of bus.

The memory 1403 may be a read-only memory (ROM) or another type of static storage device that can store static information and instructions, a random-access memory (RAM) or another type of dynamic storage device that can store information and instructions, an electrically erasable programmable ROM (EEPROM), a compact disc ROM (CD-ROM) or another optical storage, an optical disk storage (including a CD, a laser disk, an optical disk, a digital versatile disc, a Blu-ray Disc, and the like), a magnetic disk storage medium/another magnetic storage device, or any other medium that can carry or store a computer program and can be read by a computer, which is not limited herein.

The memory 1403 is configured to store a computer program for performing the embodiment of this application, and is controlled and performed by the processor 1401. The processor 1401 is configured to execute the computer program stored in the memory 1403, to implement the operations shown in the foregoing method embodiments.

The electronic device includes, but is not limited to, a server, a terminal, a cloud computing device, and the like.

An embodiment of this application provides a computer-readable medium, having a computer program stored therein, the computer program, when executed by a processor, implementing operations of the foregoing method embodiments and corresponding content.

An embodiment of this application further provides a computer program product, including a computer program, the computer program, when executed by a processor, implementing operations of the foregoing method embodiments and corresponding content.

In some embodiments of this application, the term "module" or "unit" refers to a computer program having a predetermined function or a part of a computer program, and works together with other relevant parts to achieve a predetermined objective, and may be completely or partially implemented by using software, hardware (for example, a processing circuit or a memory), or a combination thereof. Similarly, one processor (or a plurality of processors or memories) may be configured to implement one or more modules or units. In addition, each module or unit may be a part of an overall module or unit including a function of the module or the unit.

A person skilled in the art may understand that, unless otherwise specifically stated, the singular forms "a", "an", "the", and "this" used herein may also include plural forms. The terms "include" and "comprise" used in some embodiments of this application mean that corresponding features may be implemented as presented features, information, data, steps, or operations, but do not exclude implementation as other features, information, data, steps, or operations supported in the technical field. The features described in connection with any one of the embodiments disclosed herein may be combined with features of any other embodiment, where such combination is technically compatible and consistent with the overall technical concept of the present invention. In particular, technical features from different embodiments that serve the same or similar technical purpose may be freely selected and combined with each other to form further embodiments.

In the specification, claims, and accompanying drawings of this application, the terms "first", "second", "third", "fourth", "1", "2", and the like (if existent) are intended to distinguish between similar objects but do not necessarily indicate a specific order or sequence. The data used in such a way are interchangeable in proper circumstances, so that the embodiments of this application described herein can be implemented in other orders than the order illustrated or described herein.

Although operations are indicated by arrows in the flowcharts of the embodiments of this application, an implementation sequence of the operations is not limited to the sequence indicated by the arrows. Unless explicitly described in this specification, in some embodiments of this application, implementation operations in the flowcharts may be performed in another sequence according to requirements. In addition, some or all of the operations in each flowchart may include a plurality of sub-operations or a plurality of stages based on an implementation scenario. Some or all of these sub-operations or stages may be performed at the same moment, and each of these sub-operations or each sub-operation or stage in the stages may be separately performed at different moments. In different execution moments, an execution sequence of these sub-operations or stages may be flexibly configured according to requirements. This is not limited by embodiments of this application.

Technical features of the foregoing embodiments may be combined in different manners to form other embodiments. For concise description, not all possible combinations of the technical features in the embodiment are described. However, provided that combinations of the technical features do not conflict with each other, the combinations of the technical features are considered as falling within the scope recorded in this specification.

The above are some implementations of the implementation scene of this application. Those of ordinary skill in the art may adopt other similar implementation manners based on the technical idea of this application without departing from the concept of the technical solutions of this application, and these similar implementation manners still fall within the scope of protection of the embodiments of this application.

## Claims

1. A data processing system, the system comprising a terminal device and a computing cluster, the computing cluster comprising at least two layer for core, LC, devices, at least two layer for access, LA, device groups each associated with at least one of the LC devices, and cloud computing devices associated with the LA device groups; cloud computing devices associated with a same LA device group communicating with each other via at least one LA device within the LA device group, and cloud computing devices associated with different LA device groups communicating with each other via LA devices of the different LA device groups and an LC device; and
the terminal device being configured for:
transmitting, to a first cloud computing device of the at least two cloud computing devices in the computing cluster, a first obtaining request for obtaining LA device group identification information corresponding to the first cloud computing device;
receiving LA device group identification information returned by the first cloud computing device; and
sorting the at least two cloud computing devices by the LA device group identification information, and
performing computation using at least two cloud computing devices from a same LA device group that are identified through the sorting.

2. The system according to claim 1, further comprising: a cloud management device,
the cloud management device being configured for:
performing transformation on an identifier of an LA device group associated with a cloud computing device to obtain LA device group identification information of the cloud computing device, and
providing the LA device group identification information of the cloud computing device to the cloud computing device.

3. The system according to claim 1, further comprising a cloud management device,
the terminal device being configured for:
transmitting, to the cloud management device, an allocation request for allocating at least two cloud computing devices to the terminal device; and
receiving device identifiers of the at least two cloud computing devices returned by the cloud management device, and identifying the at least two cloud computing devices specified by the device identifiers; and
the cloud management device being configured for:
determining a quantity of idle cloud computing devices associated with each of the LA device groups;
determining an order of the LA device groups based on the quantity of idle devices,
selecting, sequentially in the order of the LA device groups, at least two cloud computing devices from cloud computing devices associated with the LA device groups, and
providing the device identifiers of the at least two cloud computing devices to the terminal device.

4. The system according to claim 3, wherein the allocation request is for creating a user computing cluster; and
the cloud management device is configured for:
arranging the LA device groups in a descending order of the quantity of idle cloud computing devices in respective LA device groups, to obtain a first LA device group sequence; and
selecting, sequentially in an order of the LA device groups in the first LA device group sequence, the at least two cloud computing devices from cloud computing devices associated with the LA device groups, to construct the user computing cluster.

5. The system according to claim 4, wherein the cloud management device is configured for:
arranging, when the first LA device group sequence comprises LA device groups having a same quantity of idle cloud computing devices, the LA device groups having a same quantity of idle cloud computing devices in an ascending order of a total number of user computing clusters to which the cloud computing devices in each of the LA device groups belong, to obtain a second LA device group sequence; and
selecting, sequentially in an order of the LA device groups arranged in the second LA device group sequence, the at least two cloud computing devices from cloud computing devices associated with LA device groups in the first LA device group sequence.

6. The system according to claim 4 or 5, wherein the cloud management device is configured for:
searching in the at least two LA device groups for an idle LA device group in which all of cloud computing devices are in an idle state; and
selecting, when at least one idle LA device group is found, the at least two cloud computing devices from cloud computing devices in the at least one idle LA device group, to construct the user computing cluster.

7. The system according to claim 3, wherein the allocation request is for adding at least one cloud computing device to a user computing cluster, and
the cloud management device is configured for:
arranging LA device groups to which the cloud computing devices in the user computing cluster belong in an ascending order of the quantity of idle cloud computing devices, to obtain a third LA device group sequence; and
adding, into the user computing cluster, at least one cloud computing device sequentially selected from the LA device groups in an order of the LA device groups arranged in the third LA device group sequence.

8. A data processing method, performed by a terminal device, and comprising:
transmitting, to a first cloud computing device of at least two cloud computing devices in a computing cluster, a first obtaining request for obtaining layer for access, LA, device group identification information corresponding to the first cloud computing device; the computing cluster comprising at least two layer for core, LC, devices, at least two LA device groups each associated with at least one of the LC devices, and cloud computing devices associated with the LA device groups; cloud computing devices associated with a same LA device group communicating with each other via at least one LA device of the LA device group, and cloud computing devices associated with different LA device groups communicating with each other via LA devices of the different LA device groups and an LC device;
receiving LA device group identification information returned by the first cloud computing devices; and
sorting the at least two cloud computing devices by the LA device group identification information, and
performing computation using at least two cloud computing devices from a same LA device group that are identified through the sorting.

9. The method according to claim 8, further comprising:
transmitting, to a cloud management device, an allocation request for allocating cloud computing devices to the terminal device; and
receiving device identifiers of the at least two cloud computing devices returned by the cloud management device, and
identifying the at least two cloud computing devices specified by the device identifiers.

10. A data processing method, performed by a cloud management device of a computing cluster, the computing cluster comprising at least two layer for core, LC, devices, at least two layer for access, LA, device groups each associated with at least one of the LC devices, and a plurality of cloud computing devices associated with the LA device groups; cloud computing devices associated with a same LA device group communicating with each other via at least one LA device within the LA device group, and cloud computing devices associated with different LA device groups communicating with each other via LA devices of the different LA device groups and an LC device; and
the method comprising:
determining an identifier of an LA device group associated with a cloud computing device;
determining, based on the identifier of the LA device group, LA device group identification information associated with the cloud computing device, and
providing the cloud computing device with the LA device group identification information which is representation information of the identifier of the LA device group associated with the cloud computing device and is used by a terminal device for sorting at least two cloud computing devices to determine at least two cloud computing devices from a same LA device group for performing computation for the terminal device.

11. The method according to claim 10, wherein determining the LA device group identification information associated with the cloud computing device comprises:
performing transformation on the identifier of the LA device group associated with the cloud computing device, to obtain the LA device group identification information.

12. The method according to claim 10, further comprising:
determining, when receiving from a terminal device an allocation request for allocating at least two cloud computing devices to the terminal device, a quantity of idle cloud computing devices associated with each of the LA device groups;
determining an order of the device groups based on the quantity of idle cloud computing devices;
selecting, sequentially in the order of the LA device groups, at least two cloud computing devices from the cloud computing devices associated with LA device groups; and
providing device identifiers of the at least two cloud computing devices to the terminal device.

13. The method according to claim 12, wherein the allocation request is for creating a user computing cluster;
wherein selecting the at least two cloud computing devices comprises:
arranging the at least two LA device groups in a descending order of the quantity of idle cloud computing devices, to obtain a first LA device group sequence; and
selecting, sequentially in an order of the LA device groups arranged in the first LA device group sequence, the at least two cloud computing devices from cloud computing devices associated with at least one LA device group of the at least two LA device groups, to construct the user computing cluster.

14. The method according to claim 13, wherein selecting the at least two cloud computing devices from cloud computing devices associated with at least one LA device group of the at least two LA device groups comprises:
arranging, when the first LA device group sequence comprises at least two LA device groups having a same quantity of idle cloud computing devices, the LA device groups in the first LA device group sequence in an ascending order of a total number of user computing clusters to which the cloud computing devices in each of the LA device groups belong, to obtain a second LA device group sequence; and
selecting, sequentially in an order of the LA device groups arranged in the second LA device group sequence, the at least two cloud computing devices from cloud computing devices associated with at least one LA device group of the at least two LA device groups.

15. The method according to claim 13 or 14, wherein selecting the at least two cloud computing devices comprises:
searching the at least two LA device groups for an idle LA device group in which all of cloud computing devices are in an idle state; and
selecting, when at least one idle LA device group is found, at least two cloud computing devices from cloud computing devices associated with the at least one idle LA device group, to construct the user computing cluster.

16. The method according to claim 12, wherein the allocation request is for adding at least one cloud computing device to a user computing cluster; and
wherein selecting the at least two cloud computing devices comprises:
arranging at least one LA device group to which the cloud computing devices in the user computing cluster belong in an ascending order of the quantity of idle cloud computing devices, to obtain a third LA device group sequence; and
adding, into the user computing cluster, at least one cloud computing device sequentially selected in an order of the at least one LA device group arranged in the third LA device group sequence.

17. The method according to claim 15 or 16, further comprising:
arranging, when a requirement of the allocation request is not met, the at least two LA device groups in a descending order of the quantity of idle cloud computing devices, to obtain a fourth LA device group sequence; and
selecting, sequentially in an order of the LA device groups arranged in the fourth LA device group sequence, at least one cloud computing device from cloud computing devices associated with at least one LA device group of the at least two LA device groups until the requirement is met.

18. An electronic device, comprising a memory, a processor, and a computer program stored on the memory, the processor executing the computer program to implement operations of the method according to any one of claims 8 to 17.

19. A computer-readable storage medium, having a computer program stored therein, the computer program, when executed by a processor, implementing operations of the method according to any one of claims 8 to 17.

20. A computer program product, comprising a computer program, the computer program, when executed by a processor, implementing operations of the method according to any one of claims 8 to 17.
